# EUROPEAN PATENT APPLICATION

(11) **EP 1 995 955 A2**
(43) Date of publication of application: **26.11.2008**
(21) Application number: 08009300.8
(22) Date of filing: 20.05.2008
(51) Int. Cl.: H04N 5/52

(54) **Television receiver**

(30) Priority: 22.05.2007 JP 2007135628
(71) Applicant: Funai Electric Co., Ltd., Daito-shi, Osaka 574-0013 (JP)
(72) Inventor: Ikuwa, Akitsugu, Osaka (JP)
(74) Representative: Grünecker, Kinkeldey, Stockmair & Schwanhäusser Anwaltssozietät

(57) **Abstract**

The present invention discloses a television receiver 100 that extracts a video signal from a received television broadcast signal and displays video on a screen 15a based on the video signal, the television receiver 100 characterized by comprising: a snow noise detection unit U1 that detects snow noise of the video displayed on the screen 15a; a brightness amplitude reduction unit U2 that displays a translucent image to reduce brightness amplitude of the screen 15a while displaying the snow noise if the snow noise detection unit U1 detects the snow noise; and the brightness amplitude reduction unit U2 that displays, on the screen 15a, video without the translucent, if the snow noise detection unit U1 does not detect the snow noise.

## Description

### Technical Field to which the Invention Belongs

The present invention relates to a television receiver.

### Related Background Art

Conventionally, there have been known, as techniques of controlling a brightness level in accordance with a predetermined condition, a technique of suppressing a brightness signal level in accordance with an IF-AGC voltage (Japanese Patent Application Laid-Open No. 9-322019), a technique of reducing the brightness of a video signal based on a difference between output levels of an AGC circuit to reduce white noise on a display screen (Japanese Patent Application Laid-Open No. 2005-236816), and a technique of steplessly reducing a brightness level in accordance with a received electric field strength to gradually lighten the color of a screen as the reception status deteriorates (Japanese Patent Application Laid-Open No. 2007-43501).

However, in the case of reducing the brightness level in accordance with the IF-AGC voltage or the reception status as described in Japanese Patent Application Laid-Open No. 9-322019 and Japanese Patent Application Laid-Open No. 2007-43501, it is difficult for a user to check the level of snow noise. Further, a state of a black level as final brightness cannot be distinguished from failure, thus impairing user convenience. The technique described in Japanese Patent Application Laid-Open No. 2005-236816 prevents white horizontal-line noise caused by a reception level variation during antenna switching operation, but does not deal with snow noise. Further, in these three patent documents, consideration is not given to EMI (Electro-Magnetic Interference).

### Disclosure of the Invention

The present invention discloses to provide a television receiver that can reduce EMI caused by electromagnetic waves radiated from a screen during the display of snow noise without impairing user convenience.

One aspect of the present invention provides a television receiver that extracts a video signal from a received television broadcast signal and displays video on a screen based on the video signal, the television receiver characterized by comprising: a snow noise detection unit that detects snow noise of the video displayed on the screen; a brightness amplitude reduction unit that displays a translucent image to reduce brightness amplitude of the screen while displaying the snow noise, if the snow noise detection unit detects the snow noise; and the brightness amplitude reduction unit that displays, on the screen, video without the translucent, if the snow noise detection unit does not detect the snow noise.

The display of the translucent image is to superimpose an image of a predetermined uniform color on the full screen. This display of the translucent image may be implemented by actually superimposing the translucent image on the video signal, or may be implemented by combining brightness reduction and contrast reduction by operating color signals and a brightness signal and an image processing filter such as a diffusing filter.

An optional aspect of the present invention provides the television receiver characterized in that the snow noise detection unit detects that the snow noise is present in the video displayed on the screen if electric field strength of the television broadcast signal is lower than a predetermined electric field strength.

Another optional aspect of the present invention provides the television receiver characterized in that the snow noise detection unit detects that the snow noise is not present in the video displayed on the screen if the electric field strength of the television broadcast signal is higher than the predetermined electric field strength, and the brightness amplitude reduction unit displays, on the screen, video without the translucent image based on the video signal if the snow noise detection unit detects that the snow noise is not present in the video displayed on the screen, and displays the translucent image to reduce the brightness amplitude of the screen while displaying the snow noise if the snow noise detection unit detects that the snow noise is present in the video displayed on the screen.

Another optional aspect of the present invention provides the television receiver characterized by further comprising: an automatic gain control unit that controls a gain in accordance with a reception strength of the television broadcast signal; and the snow noise detection unit determining that the snow noise is present in the video displayed on the screen if the reception strength is lower than a predetermined threshold.

Another optional aspect of the present invention provides the television receiver characterized in that the snow noise detection unit determines that the snow noise is not present in the video displayed on the screen if the reception strength is higher than the predetermined threshold, and the brightness amplitude reduction unit displays, on the screen, video without the translucent image based on the video signal if the snow noise detection unit determines that the snow noise is not present in the video displayed on the screen, and displays the translucent image to reduce the brightness amplitude of the screen while displaying the snow noise if the snow noise detection unit determines that the snow noise is present in the video displayed on the screen.

Another optional aspect of the present invention provides the television receiver characterized in that the snow noise detection unit detects that the snow noise is present in the video displayed on the screen if there is no input of the television broadcast signal.

Another optional aspect of the present invention provides the television receiver characterized by further comprising a video signal superimposition circuit superimposing a signal for displaying the translucent image on the video signal, wherein the translucent image is a translucent black image, and the brightness amplitude reduction unit generates the signal for displaying the translucent black image through a circuit having a function of generating an on-screen display signal.

These and other features, aspects, and advantages of the invention will be apparent to those skilled in the art from the following detailed description of preferred non-limiting exemplary embodiments, taken together with the drawings and the claims that follow.

### Brief Description of the Drawings

It is to be understood that the drawings are to be used for the purpose of exemplary illustration only and not as a definition of the limits of the invention.

FIG. 1 is an exemplary illustration of a block diagram of a television receiver according to an embodiment of the present invention.

FIG. 2 is an exemplary illustration of a graph showing actual measurements of electromagnetic waves radiated from the screen without snow noise.

FIG. 3 is an exemplary illustration of a graph showing actual measurements of electromagnetic waves radiated from the screen with snow noise.

FIG. 4 is an exemplary illustration of a flowchart showing the flow of the processing by an EMI reduction program.

### Description of Special Embodiments

The detailed description set forth below in connection with the appended drawings is intended as description of presently preferred embodiments of the invention and is not intended to represent the only forms in which the present invention may be constructed and or utilized.

A preferred embodiment of the present invention will be described with reference to the accompanying drawings.

Another aspect of the present invention provides a television receiver 100 that extracts a video signal from a received television broadcast signal and displays video on a screen 15a based on the video signal, the television receiver 100 characterized by comprising:
a snow noise detection unit U1 for detecting snow noise of the video displayed on the screen 15a;
a brightness amplitude reduction unit U2 for displaying a translucent image to reduce brightness amplitude of the screen 15a while displaying the snow noise if the snow noise detection unit U1 detects the snow noise;
the brightness amplitude reduction unit U2 displaying, on the screen 15a, video without the translucent, if the snow noise detection unit U1 does not detect the snow noise;
a first storage area 17d for storing a first set value which is used if the snow noise is not detected;
a second storage area 17e for storing a second set value which is used if the snow noise is detected;
the brightness amplitude reduction unit U2 performing brightness amplitude reduction corresponding to the first set value stored in the first storage area 17d if the snow noise detection unit U1 detects that the snow noise is not present in the video displayed on the screen 15a;
the brightness amplitude reduction unit U2 performing brightness amplitude reduction corresponding to the second set value stored in the second storage area 17e if the snow noise detection unit U1 detects that the snow noise is present in the video displayed on the screen 15a;
a tuner 10 for receiving the television broadcast signal, selecting a carrier frequency corresponding to a specified channel, converting the carrier frequency into an intermediate frequency signal, and outputting the intermediate frequency signal;
an intermediate frequency amplifier circuit 11 for amplifying the intermediate frequency signal into necessary amplitude by an amplification factor corresponding to an automatic gain control voltage and outputting the amplified signal;
a video detector circuit 12 for extracting a composite video signal from the intermediate frequency signal outputted from the intermediate frequency amplifier circuit 11 and outputting the composite video signal;
an automatic gain control circuit 16 for acquiring the composite video signal from the video detector circuit 12 and generating an automatic gain control voltage corresponding to an amplitude of a synchronization signal of the composite video signal;
a separation circuit 13a for amplifying the composite video signal outputted from the video detector circuit 12, outputting a brightness signal and a carrier chrominance signal, and outputting a synchronization signal obtained by synchronization separation;
a chrominance demodulation circuit 13b for demodulating the carrier chrominance signal into a color-difference signal, using a frequency of an input color burst signal, and outputting the color-difference signal;
a matrix circuit 13c for performing matrix conversion based on the brightness signal and the color-difference signal to generate an RGB (Red-Green-Blue) signal;
a liquid crystal module 15 having the screen 15a;
a liquid crystal driver circuit 14 for driving the liquid crystal module 15 based on the RGB signal to display video on the screen 15a;
a microcomputer 17 having a central processing unit 17a and a semiconductor memory 17b, 17c;
the microcomputer 17 controlling the tuner 10, the automatic gain control circuit 19, the separation circuit 13a, the chrominance demodulation circuit 13b, the matrix circuit 13c, and the liquid crystal driver circuit 14;
the semiconductor memory 17c storing a control program for allowing a computer to implement the snow noise detection unit U1 and the brightness amplitude reduction unit U2;
the snow noise detection unit U1 implemented by executing the control program in the microcomputer 17;
the snow noise detection unit U1 detecting the snow noise of the video displayed on the screen 15a;
the brightness amplitude reduction unit U2 implemented by executing the control program in the microcomputer 17; and
the brightness amplitude reduction unit U2 displaying the translucent image to reduce the brightness amplitude of the screen 15a while displaying the snow noise if the snow noise detection unit detects the snow noise.

### (1) Configuration of Television Receiver

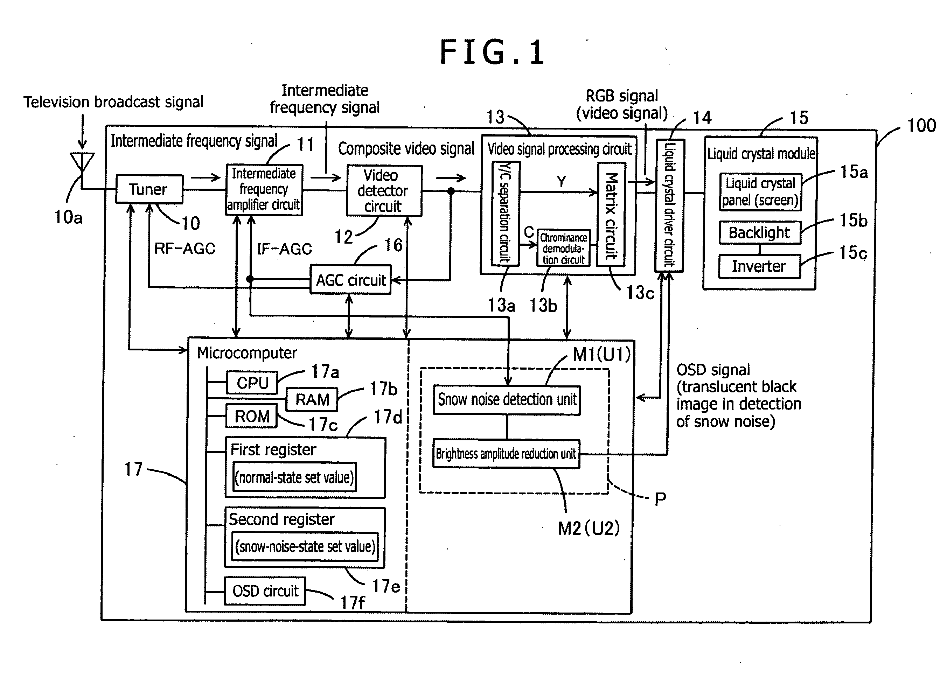

AS shown in FIG. 1, a television receiver 100 includes a tuner 10, an intermediate frequency amplifier circuit 11, a video detector circuit 12, a video signal processing circuit 13, a liquid crystal driver circuit 14, a liquid crystal module 15, an AGC (Automatic Gain Control) circuit 16, and a microcomputer 17. FIG. 1 shows only a video signal processing system for simplicity. An antenna 10a is connected to the television receiver 100 through an antenna terminal, and a television wave (television broadcast signal) received by antenna 10a is inputted to the tuner 10.

This embodiment will be described by way of example of a liquid crystal television with a liquid crystal panel as a display device. As a matter of course, the television receiver may be a cathode-ray tube television or a plasma television, and may not have a display device therein as long as it has a tuner. The invention can be applied to a recording/reproducing apparatus such as an HDD (Hard Disk drive) recorder or a DVD (digital Versatile Disk) recorder.

The tuner 10 can adopt, for example, a PLL (Phase Lock Loop) synthesizer channel selection system, and can control a receivable frequency by selecting a division ratio of a fixed frequency divider or a variable frequency divider. This frequency control is performed by the microcomputer 17. The tuner 10 selects a carrier frequency corresponding to a channel in accordance with the control of the microcomputer 17, high-frequency-amplifies the received frequency signal (television broadcast signal), and converts it into an intermediate frequency signal by heterodyne detection. In this high-frequency amplification, an amplification factor is determined in accordance with an RF-AGC (Radio Frequency Automatic Gain Control) voltage outputted from the AGC circuit 16 described later.

The intermediate frequency amplifier circuit 11 amplifies the intermediate frequency signal into necessary amplitude. In this intermediate frequency amplification, an amplification factor is determined in accordance with an IF-AGC (Intermediate Frequency Automatic Gain Control) voltage outputted from the AGC circuit 16 described later.

The video detector circuit 12 extracts a carried signal from a modulated signal (carrier signal + carried signal). That is, the video detector circuit 12 extracts a composite video signal (brightness signal + carrier chrominance signal subjected to carrier suppression quadrature two-phase modulation + synchronization signal) from the intermediate frequency signal.

The AGC circuit 16 is an automatic gain control circuit (automatic gain control unit). The AGC circuit 16 acquires the composite video signal (video detection output) outputted from the video detector circuit 12, and generates an RF-AGC voltage and an IF-AGC voltage (automatic gain control voltage) corresponding to the amplitude (reception strength) of a synchronization signal of the video detection output. Generally, in the case where the electric field of a broadcast wave (television broadcast signal) is strong (in the case of a strong electric field input), the IF-AGC voltage is high, whereas in the case where the electric field of a broadcast wave is weak (in the case of a weak electric field input), the IF-AGC voltage is low. As the AGC circuit 16, there is employed a peak AGC circuit which outputs an AGC voltage proportional to the amplitude of a synchronization signal, a keyed AGC circuit which generates a voltage when a broadcast wave becomes a certain amplitude, or the like. As a matter of course, by reversing the strength and the weakness of the voltage, the IF-AGC voltage can be negatively correlated with the strength and the weakness of a broadcast wave.

The RF-AGC voltage is inputted to the tuner 10, which performs automatic gain control of decreasing the amplification factor as the RF-AGC voltage increases. Similarly, the IF-AGC voltage is inputted to the intermediate frequency amplifier circuit 11, which performs automatic gain control of decreasing the amplification factor as the IF-AGC voltage increases. By the amplification performed by the tuner 10 and the intermediate frequency amplifier circuit 11, video signal strength to be inputted to the video signal processing circuit 13 is adjusted to an ideal value normalized by the amplitude of the synchronization signal. As shown in FIG. 1, the tuner 10 and the intermediate frequency amplifier circuit 11 are of a forward type; however, the invention can also be achieved by a reverse type.

In the video signal processing circuit 13, the composite video signal is further amplified, and a Y/C separation circuit (separation circuit) 13a performs Y/C separation and outputs a brightness signal (Y) to a matrix circuit 13c and a carrier chrominance signal (C) to a chrominance demodulation circuit 13b. The Y/C separation circuit 13a further outputs a synchronization signal obtained by synchronization separation to the microcomputer 17.

The chrominance demodulation circuit 13b demodulates the separated carrier chrominance signal into color-difference signals R-Y and B-Y, which are outputted to the matrix circuit 13c. The matrix circuit 13c performs matrix conversion based on the inputted brightness signal and color-difference signals to generate an RGB (Red-Green-Blue) signal as image data. If a color burst signal is inputted to the chrominance demodulation circuit 13b from the microcomputer 17, the chrominance demodulation circuit 13b uses the frequency of the color burst signal (chrominance subcarrier frequency) for demodulation into color-difference signals.

The liquid crystal driver circuit (video signal superimposition circuit) 14 drives the liquid crystal module 15 based on the RGB signal to display video on a screen 15a. The liquid crystal driver circuit 14 includes a number-of-pixels conversion circuit, an image quality adjustment circuit, an output processing circuit, and a frame memory. The number-of-pixels conversion circuit performs scaling on the RGB signal inputted from the matrix circuit 13c to generate a for-one-screen RGB signal displayed on a liquid crystal panel 15a. Further, the number-of-pixels conversion circuit stores the for-one-screen RGB signal as pixel information into the frame memory. The image quality adjustment circuit adjusts the brightness, contrast, black balance, and white balance of the RGB signal (video signal) stored in the frame memory by the number-of-pixels conversion circuit. The output processing circuit performs gamma correction, dithering, and the like on the RGB signal that has undergone the image quality adjustment by the image quality adjustment circuit; adds a background signal, an OSD (On-Screen Display) signal, a blanking signal, and the like to the RGB signal; and outputs it to the liquid crystal panel 15a for display of the video.

The liquid crystal module 15 is composed of the liquid crystal panel (screen) 15a, a backlight 15b for illuminating the liquid crystal panel 15a from the back, and an inverter 15c for supplying a predetermined voltage generated from an inputted power supply voltage to the backlight 15b and lighting it. In the case where the backlight 15b is composed of a discharge lamp, the inverter 15c converts an inputted power supply voltage into an AC voltage and supplies the AC voltage to the backlight 15b.

The microcomputer 17 includes a CPU (Central Processing Unit) 17a, semiconductor memories 17b and 17c, a first register (first storage area) 17d, a second register (second storage area) 17e, and an OSD circuit 17f. The ROM (Read Only Memory) 17c stores a control program P for allowing the computer to implement a snow noise detection unit U1 and a brightness amplitude reduction unit U2. The first register 17d stores a first set value (normal-state set value) which is used when snow noise is not detected. The second register 17e stores a second set value (snow-noise-state set value) which is used when snow noise is detected. That is, the normal-state set value used not in a snow-noise state is stored in the first register 17d, and the snow-noise-state set value used in a snow-noise state is stored in the second register 17e. The first register 17d and the second register 17e may be included in the ROM 17c. The OSD circuit 17f is a circuit having the function of generating an on-screen display signal. The microcomputer 17 is electrically connected to each unit in the television receiver 100, and organically controls each unit for operation of the television receiver.

The CPU 17a reads program data from the ROM 17c and develops it on the RAM (Random Access Memory) 17b, thereby to execute an EMI reduction program P. The EMI reduction program P is composed of a plurality of modules (a snow noise detection module M1 and a brightness amplitude reduction module M2). By executing these modules, the snow noise detection unit U1 and the brightness amplitude reduction unit U2 according to the invention are concretely implemented. Hereinafter, each unit will be described.

The snow noise detection unit U1 determines the electric field strength of a broadcast wave inputted to the antenna 10a, based on an IF-AGC voltage outputted from the AGC circuit 16. The IF-AGC voltage is inputted to the microcomputer 17 from the AGC circuit 16, and the snow noise detection unit U1 acquires the IF-AGC voltage and determines whether the IF-AGC voltage is higher or lower than a predetermined threshold. As a result of this determination, if the voltage is higher than the predetermined threshold, the snow noise detection unit U1 determines that the input is a strong electric field input (normal electric field). If the voltage is lower than the predetermined threshold, the snow noise detection unit U1 determines that the input is a weak electric field input (weak electric field). Further, an external input such as a video input produces an IF-AGC voltage higher than the predetermined threshold, and therefore is determined to be a normal electric field. This determination result is notified to the brightness amplitude reduction unit U2.

The brightness amplitude reduction unit U2 reduces the brightness and contrast of the full screen in accordance with a set value stored in the first register or the second register and superimposes a monotone image on the full screen to suppress roughness in the image. The brightness amplitude reduction unit U2 generates a signal for displaying a translucent black image by means of the OSD (On Screen Display) circuit 17f to reduce brightness amplitude. The translucent image displayed by the brightness amplitude reduction unit U2 is not limited to a black image, but may be a colored image such as translucent white, red, green, or blue. Specifically, translucent black image data is stored beforehand in the ROM 17c, and the brightness amplitude reduction unit U2 outputs this data to the output processing circuit of the liquid crystal driver circuit 14 for OSD display.

### (2) About EMI by Snow Noise

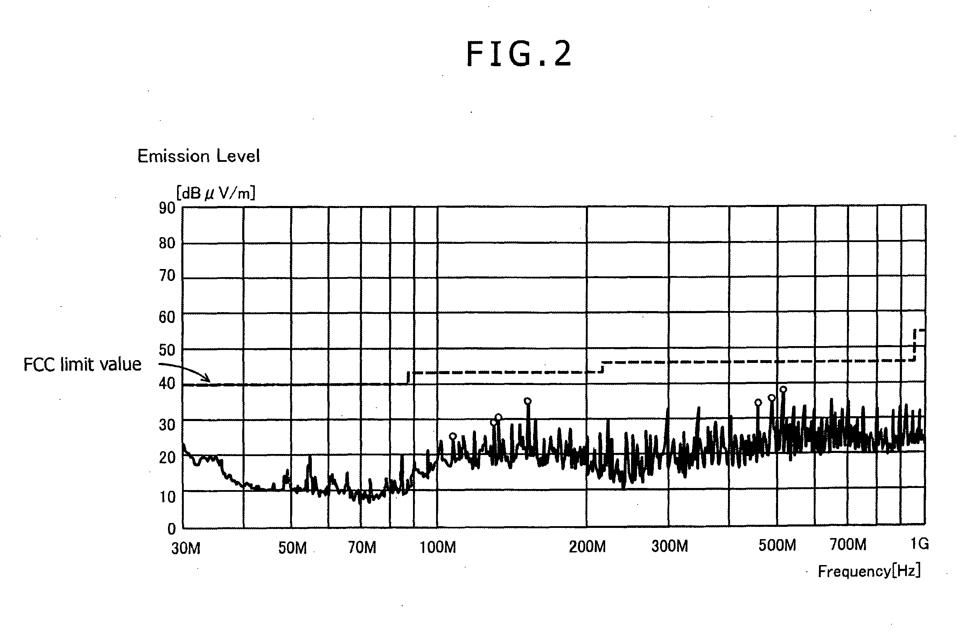

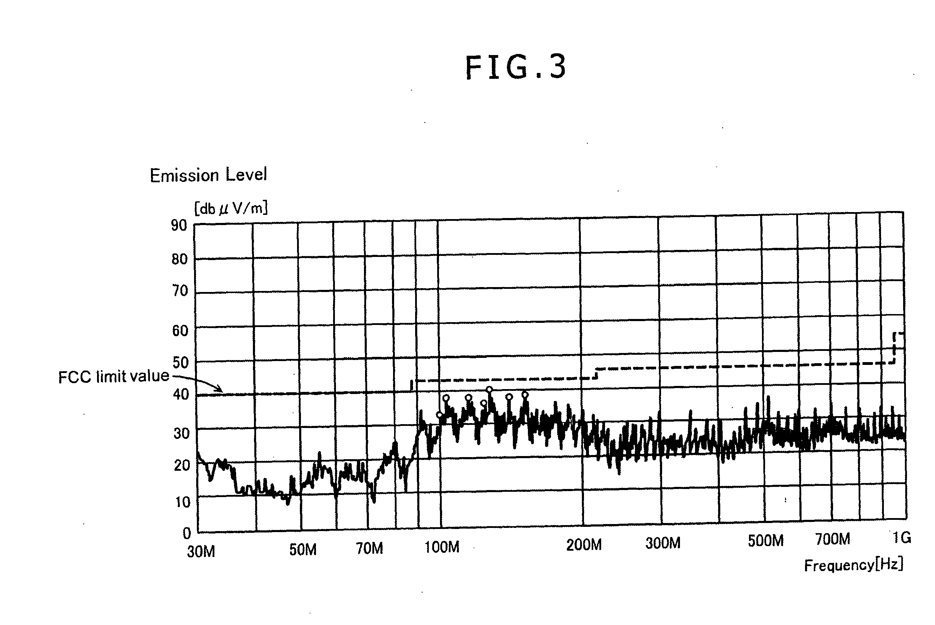

Hereinafter, EMI (Electro-Magnetic Interference) during the display of snow noise will be described with reference to FIGS. 2 and 3. FIG. 2 is a graph showing actual measurements of electromagnetic waves radiated from the screen without snow noise, and FIG. 3 is a graph showing actual measurements of electromagnetic waves radiated from the screen with snow noise. In FIGS. 2 and 3, limit values required by FCC (Federal Communications Commission) Part 15 Subpart B are shown for reference.

In the invention, the snow noise against which EMI measures are taken occurs during a reduction in reception signal level of a terrestrial analog television broadcast, and signifies a snow state of no signal received or synchronization disturbance due to the reduction in reception level. The reduction in reception level can be caused by any reason, and some of the causes are as follows:
* deviation of antenna orientation
* failure of an antenna cable or connector
* inaccurate tuning of the frequency of a reception channel
* too far from a transmitting station
* an obstacle to the radio wave or interference by a radio wave of an adjacent frequency (sensitivity suppression)
*bad weather
That is, the snow noise refers to general snow noise which occurs during a reduction in the electric field strength of a television broadcast signal to be inputted to the television receiver (a weak electric field input).

An image with snow noise is fine black-and-white video, and pixels constituting the image are continuously black-and-white-inverted with a short cycle. Accordingly, high-frequency electromagnetic waves (noise) are radiated at a very high amplitude level. A comparison will be made between FIG. 2 and FIG. 3. First, as for the screen without snow noise of FIG. 2, measured peaks close to the FCC limit values include one peak of about 35 dBµV/m in the range of 88 to 216 MHz and one peak of about 48 dBµV/m in the range of 216 to 960 MHz, which generally satisfies the EMI standard.

On the other hand, as for the screen with snow noise of FIG. 3, electromagnetic radiation in the range of 100 to 200 MHz is greater than that in FIG. 2. While the FCC limit value of this frequency band (88 to 216 MHz) is 43.5 dBµV/m, at least four peaks exceeds 38 dBµV/m, and one peak exceeds 40 dBµV/m. Although these values stay within the FCC limit value, this is not a preferable state. For this reason, as described below, processing for reducing EMI radiated from the screen is executed upon detection of snow noise, in which the snow noise is detected by the presence or absence of a television broadcast signal input or the determination of the electric field strength of a television broadcast signal.

### (3) Processing by Microcomputer for reducing EMI

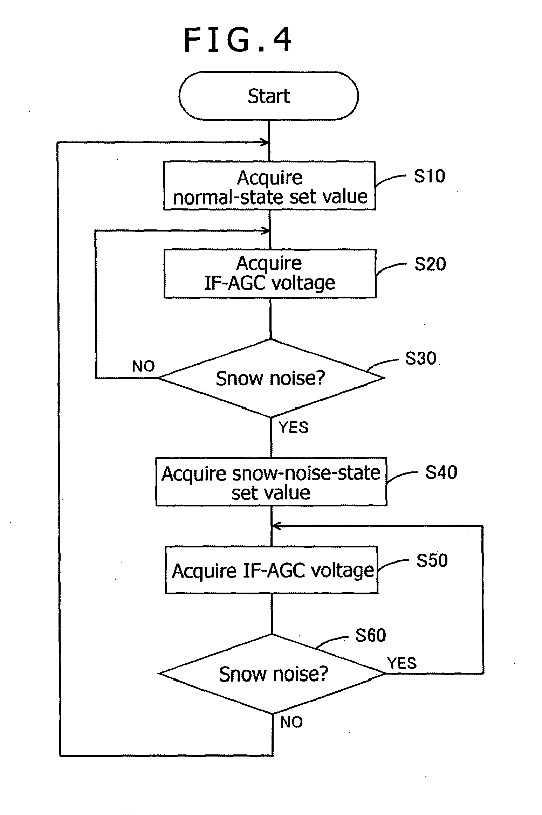

FIG. 4 is a flowchart showing the flow of the processing by the EMI reduction program. The processing of FIG. 4 is continuously executed while the television receiver remains turned on.

When the processing is started upon power-up, in step S10 the microcomputer 17 acquires a first set value corresponding to normal electric field strength. That is, the microcomputer 17 acquires a normal-state set value for non-OSD display of a translucent black image as default setting, from the first register 17d. The default setting acquired in step S10 continues to be used until the input becomes a weak electric field input. The microcomputer 17 does not output the OSD signal of the translucent black image in the case of acquiring the set value in step S 10; accordingly, the liquid crystal driver circuit 14 does not superimpose the translucent black image on a video signal. As a matter of course, the microcomputer 17 performs other processing as well as this processing and outputs an OSD signal as appropriate in other processing.

In step S20, the microcomputer 17 acquires an IF-AGC voltage as information for determining the presence or absence of snow noise. The IF-AGC voltage indicates electric field strength (reception condition, radio wave condition) and also the presence or absence of a television broadcast signal input.

In step S30, the microcomputer 17 determines the presence or absence of snow noise. That is, the microcomputer 17 determines whether or not the IF-AGC voltage acquired in step S20 is higher than a predetermined threshold (e.g., an S/N ratio of 30 dB), that is, the electric field strength of the television broadcast signal is higher than predetermined electric field strength. If the IF-AGC voltage is lower than the predetermined threshold, that is, the electric field strength of the television broadcast signal is lower than the predetermined electric field strength, the microcomputer 17 determines that the input is a weak electric field input (the condition is true), the flow proceeds to step S40. On the other hand, if the IF-AGC voltage exceeds the predetermined threshold, that is, the electric field strength of the television broadcast signal is higher than the predetermined electric field strength, the microcomputer 17 determines that the input is a strong electric field input (normal electric field) (the condition is false), the flow returns to step S20 for repetition. In this determination of an electric field, it is also determined that a video signal whose video source is a recording medium such as VHS (Video Home System) or DVD is a strong electric field input (normal electric field).

In step S40, the microcomputer 17 acquires a second set value corresponding to a weak electric field input. That is, the microcomputer 17 acquires a snow-noise-state set value for OSD display of the translucent black image, from the second register 17e. The microcomputer 17 outputs the OSD signal of the translucent black image in the case of acquiring the set value in step S40; accordingly, the liquid crystal driver circuit 14 superimposes the translucent black image on a video signal. Superimposing the translucent black image on the video signal reduces the brightness and contrast and creates an overall image subjected to a diffusing filter. That is, the microcomputer 17 displays the snow noise while reducing the amplitude between the black and white levels of pixels, thereby reducing EMI radiated from the television receiver 100.

In step S50, as in step S20, the microcomputer 17 acquires an IF-AGC voltage as information for determining the presence or absence of snow noise in order to determine whether the snow-noise state is improved.

In step S60, the microcomputer 17 determines the presence or absence of snow noise. That is, the microcomputer 17 determines whether or not the IF-AGC voltage acquired in step S50 is higher than the predetermined threshold. That is, the microcomputer 17 determines whether or not electric field strength of the television broadcast signal is higher than predetermined electric field strength. If the IF-AGC voltage is higher than the predetermined threshold, that is, the electric field strength of the television broadcast signal is higher than the predetermined electric field strength, the microcomputer 17 determines that the snow-noise state is improved (the condition is true), so that the flow returns to step S10, where the microcomputer 17 acquires the first set value corresponding to the normal electric field strength. On the other hand, if the IF-AGC voltage is lower than the predetermined threshold, that is, the electric field strength of the television broadcast signal is lower than the predetermined electric field strength, the microcomputer 17 determines that the snow-noise state is not improved (the condition is false), so that the flow returns to step S50 for repetition. That is, if the condition is false, the microcomputer 17 repeats the step based on the second set value corresponding to the weak electric field input.

That is, the snow noise detection unit U1 determines that the snow noise is present in the video displayed on the screen 15a if the reception strength is lower than a predetermined threshold, and determines that the snow noise is not present in the video displayed on the screen 15a if the reception strength is higher than the predetermined threshold the brightness amplitude reduction unit U2 displays, on the screen 15a, video without the translucent image based on the video signal if the snow noise detection unit U1 determines that the snow noise is not present in the video displayed on the screen 15a, and displays the translucent image to reduce the brightness amplitude of the screen 15a while displaying the snow noise if the snow noise detection unit U1 determines that the snow noise is present in the video displayed on the screen 15a.

The snow noise detection unit U1 detects that the snow noise is present in the video displayed on the screen 15a if there is no input of the television broadcast signal, and detects that the snow noise is not present in the video displayed on the screen 15a if there is input of the television broadcast signal. The brightness amplitude reduction unit U2 performs brightness amplitude reduction corresponding to the first set value stored in the first storage area 17d if the snow noise detection unit U1 detects that the snow noise is not present in the video displayed on the screen 15a, and performs brightness amplitude reduction corresponding to the second set value stored in the second storage area 17e if the snow noise detection unit U1 detects that the snow noise is present in the video displayed on the screen 15a.

### (4) Conclusion

The television receiver 100 which extracts the video signal from the received the television broadcast signal and displays the video on the screen 15a based on the video signal comprises the snow noise detection unit U1 and the brightness amplitude reduction unit U2. The snow noise detection unit U1 detects the snow noise of the video displayed on the screen15a. The brightness amplitude reduction unit U2 displays the translucent image to reduce the brightness amplitude of the screen 15a while displaying the snow noise if the snow noise detection unit U1 detects the snow noise.

According to the invention, it is possible to provide the television receiver that can reduce EMI caused by electromagnetic waves radiated from the screen during the display of snow noise without impairing user convenience by enabling the user's visual recognition of the snow-noise state. Further, the snow-noise state can be easily determined by a specific criterion. Furthermore, without requiring complicated brightness and contrast adjustment, a brightness amplitude can be easily reduced by utilizing an on-screen display function incorporated in an ordinary television receiver. Further, by storing in the register a set value created in accordance with the characteristics of each individual apparatus, an optimum translucent image can be displayed without changing the other programs. That is, the invention can be applied to a plurality of kinds of apparatuses with a slight design change.

Further, it is possible to modify the above-described embodiment as follows.
In the configuration of the embodiment, based on the IF-AGC voltage outputted from the AGC circuit 16, the snow noise detection unit U1 detects the presence or absence of snow noise. However, the configuration for detecting snow noise is not limited thereto. For example, snow noise can be detected by (a) a comparison of an RGB signal generated by the video signal processing unit with a predetermined criterion level or (b) a combination of determination of the presence or absence of a synchronization signal input and the availability of Y/C separation. In the case of (a), at least one color of the RGB signal is compared with the predetermined criterion level. If the signal exceeds the predetermined criterion level, the snow noise detection unit U1 determines that snow noise is present. In the case of (b), the snow noise detection unit U1 determines whether or not a synchronization signal is present. If a synchronization signal is present, the snow noise detection unit U1 further determines whether or not it is possible to perform Y/C separation. That is, if a synchronization signal is not present and it is not possible to perform Y/C separation, the snow noise detection unit U1 determines that snow noise is present.

In the above-described embodiment, the translucent black image is displayed. However, by appropriately combining brightness reduction, contrast reduction, and a diffusing filter, the brightness amplitude of pixels may be suppressed to reduce EMI. In this case, the microcomputer 17 appropriately instructs the video signal processing circuit 13 to process image quality adjustment such as brightness, contrast, and a diffusing filter.

In the above-described embodiment, it is determined based on the IF-AGC voltage whether or not the screen is in a snow-noise state. However, it can be determined based on the RF-AGC voltage (automatic gain control voltage) or by a combination of the IF-AGC voltage and the RF-AGC voltage.

Note that, this invention is not limited to the above-mentioned embodiments. Although it is to those skilled in the art, the following are disclosed as the one embodiment of this invention.
- Mutually substitutable members, configurations, etc. disclosed in the embodiment can be used with their combination altered appropriately.
- Although not disclosed in the embodiment, members, configurations, etc. that belong to the known technology and can be substituted with the members, the configurations, etc. disclosed in the embodiment can be appropriately substituted or are used by altering their combination.
- Although not disclosed in the embodiment, members, configurations, etc. that those skilled in the art can consider as substitutions of the members, the configurations, etc. disclosed in the embodiment are substituted with the above mentioned appropriately or are used by altering its combination.

Although the invention has been described in considerable detail in language specific to structural features and or method acts, it is to be understood that the invention defined in the appended claims is not necessarily limited to the specific features or acts described. Rather, the specific features and acts are disclosed as preferred forms of implementing the claimed invention. Therefore, while exemplary illustrative embodiments of the invention have been described, numerous variations and alternative embodiments will occur to those skilled in the art. Such variations and alternate embodiments are contemplated, and can be made without departing from the spirit and scope of the invention.

In addition, reference to "first," "second," "third," and etc. members throughout the disclosure (and in particular, claims) is not used to show a serial or numerical limitation but instead is used to distinguish or identify the various members of the group.

## Claims

1. A television receiver that extracts a video signal from a received television broadcast signal and displays video on a screen based on the video signal, the television receiver **characterized by** comprising:
a snow noise detection unit that detects snow noise of the video displayed on the screen;
a brightness amplitude reduction unit that displays a translucent image to reduce brightness amplitude of the screen while displaying the snow noise, if the snow noise detection unit detects the snow noise; and
the brightness amplitude reduction unit that displays, on the screen, video without the translucent, if the snow noise detection unit does not detect the snow noise.

2. The television receiver according to claim 1, **characterized in that** the snow noise detection unit detects that the snow noise is present in the video displayed on the screen if electric field strength of the television broadcast signal is lower than predetermined electric field strength.

3. The television receiver according to claim 2, **characterized in that**
the snow noise detection unit detects that the snow noise is not present in the video displayed on the screen if the electric field strength of the television broadcast signal is higher than the predetermined electric field strength, and
the brightness amplitude reduction unit displays, on the screen, video without the translucent image based on the video signal if the snow noise detection unit detects that the snow noise is not present in the video displayed on the screen, and displays the translucent image to reduce the brightness amplitude of the screen while displaying the snow noise if the snow noise detection unit detects that the snow noise is present in the video displayed on the screen.

4. The television receiver according to claim 1, **characterized by** further comprising:
an automatic gain control unit that controls a gain in accordance with a reception strength of the television broadcast signal; and
the snow noise detection unit determining that the snow noise is present in the video displayed on the screen if the reception strength is lower than a predetermined threshold.

5. The television receiver according to claim 4, **characterized in that**
the snow noise detection unit determines that the snow noise is not present in the video displayed on the screen if the reception strength is higher than the predetermined threshold, and
the brightness amplitude reduction unit displays, on the screen, video without the translucent image based on the video signal if the snow noise detection unit determines that the snow noise is not present in the video displayed on the screen, and displays the translucent image to reduce the brightness amplitude of the screen while displaying the snow noise if the snow noise detection unit determines that the snow noise is present in the video displayed on the screen.

6. The television receiver according to claim 1, **characterized in that** the snow noise detection unit detects that the snow noise is present in the video displayed on the screen if there is no input of the television broadcast signal.

7. The television receiver according to any of claims 1 to 6, **characterized by** further comprising a video signal superimposition circuit that superimposes a signal for displaying the translucent image on the video signal,
wherein the translucent image is a translucent black image, and
the brightness amplitude reduction unit generates the signal for displaying the translucent black image through a circuit having a function of generating an on-screen display signal.

8. The television receiver according to any of claims 1 to 7, **characterized by** further comprising:
a first storage area that stores a first set value which is used if the snow noise is not detected;
a second storage area that stores a second set value which is used if the snow noise is detected;
the brightness amplitude reduction unit that performs brightness amplitude reduction corresponding to the first set value stored in the first storage area if the snow noise detection unit detects that the snow noise is not present in the video displayed on the screen; and
the brightness amplitude reduction unit that performs brightness amplitude reduction corresponding to the second set value stored in the second storage area if the snow noise detection unit detects that the snow noise is present in the video displayed on the screen.

9. The television receiver according to claim 8, **characterized by** further comprising:
a tuner that receives the television broadcast signal, selecting a carrier frequency corresponding to a specified channel, converting the carrier frequency into an intermediate frequency signal, and outputting the intermediate frequency signal;
an intermediate frequency amplifier circuit that amplifies the intermediate frequency signal into necessary amplitude by an amplification factor corresponding to an automatic gain control voltage and outputting the amplified signal;
a video detector circuit that extracts a composite video signal from the intermediate frequency signal outputted from the intermediate frequency amplifier circuit and outputting the composite video signal;
an automatic gain control circuit that acquires the composite video signal from the video detector circuit and generating an automatic gain control voltage corresponding to an amplitude of a synchronization signal of the composite video signal;
a separation circuit that amplifies the composite video signal outputted from the video detector circuit, outputting a brightness signal and a carrier chrominance signal, and outputting a synchronization signal obtained by synchronization separation;
a chrominance demodulation circuit that demodulates the carrier chrominance signal into a color-difference signal, using a frequency of an input color burst signal, and outputting the color-difference signal;
a matrix circuit that performs matrix conversion based on the brightness signal and the color-difference signal to generate an RGB (Red-Green-Blue) signal;
a liquid crystal module having the screen;
a liquid crystal driver circuit that drives the liquid crystal module based on the RGB signal to display video on the screen;
a microcomputer having a central processing unit and a semiconductor memory;
the microcomputer controlling the tuner, the automatic gain control circuit, the separation circuit, the chrominance demodulation circuit, the matrix circuit, and the liquid crystal driver circuit;
the semiconductor memory storing a control program for allowing a computer to implement the snow noise detection unit and the brightness amplitude reduction unit;
the snow noise detection unit implemented by executing the control program in the microcomputer;
the snow noise detection unit detecting the snow noise of the video displayed on the screen;
the brightness amplitude reduction unit implemented by executing the control program in the microcomputer; and
the brightness amplitude reduction unit displaying the translucent image to reduce the brightness amplitude of the screen while displaying the snow noise if the snow noise detection unit detects the snow noise.
